# FASCICULE DE BREVET EUROPEEN

(11) **EP 2 909 153 B1**
(45) Date de publication et mention de la délivrance du brevet: **30.05.2018**
(21) Numéro de dépôt: 13789855.7
(22) Date de dépôt: 16.10.2013
(51) Int. Cl.: C04B 35/10, C04B 35/565, C04B 35/584, B32B 18/00, C04B 38/06, F01D 5/28, C04B 111/00

(54) **PIÈCE EN MATÉRIAU CÉRAMIQUE AVEC UNE BASE ET UN VOILE**
KERAMISCHES BAUTEIL MIT EINER BASIS UND EINER PLATTE
CERAMIC BODY WITH A BASE AND A PLATE

(30) Priorité: 18.10.2012 FR 1259964
(43) Date de publication de la demande: 26.08.2015
(73) Titulaire: Safran Aircraft Engines, 75015 Paris (FR)
(72) Inventeur: PODGORSKI, Michael, F-77550 Moissy-Cramayel cedex (FR); MOLLIEX, Ludovic, Edmond, Camille, F-77550 Moissy-Cramayel cedex (FR)
(74) Mandataire: Gevers & Orès
(86) Numéro de dépôt international: PCT/FR2013/052470
(87) Numéro de publication internationale: WO 2014/060699

(56) Documents cités:
- FR-A1- 2 712 218
- US-A- 5 837 960
- US-A1- 2002 090 313

## Description

### Domaine technique de l'invention

Le domaine de la présente invention est celui de la fabrication des pièces réalisées au moins en partie en matière céramique et plus particulièrement de pièces de turbomachine, notamment de moteur à turbine à gaz, telles que des aubes mobiles de turbine ou des aubes fixes de distributeur.

### Etat de la technique

Dans les parties chaudes d'une turbomachine, parcourues par des gaz à haute température, on utilise couramment des alliages métalliques capables de résister à ces niveaux de température et le cas échéant un refroidissement approprié par fluide permet à ces pièces de travailler à des températures allant au-delà de la tenue du matériau.

Dans le cadre du développement de nouveaux moteurs à turbine à gaz dans le domaine aéronautique, on recherche des matériaux toujours plus légers présentant de bonnes propriétés structurales à haute température. Les céramiques sont des matériaux pouvant répondre à ces besoins. Ils s'appliquent à des pièces allant, en aval de la chambre de combustion, de la turbine à l'arrière-corps du moteur.

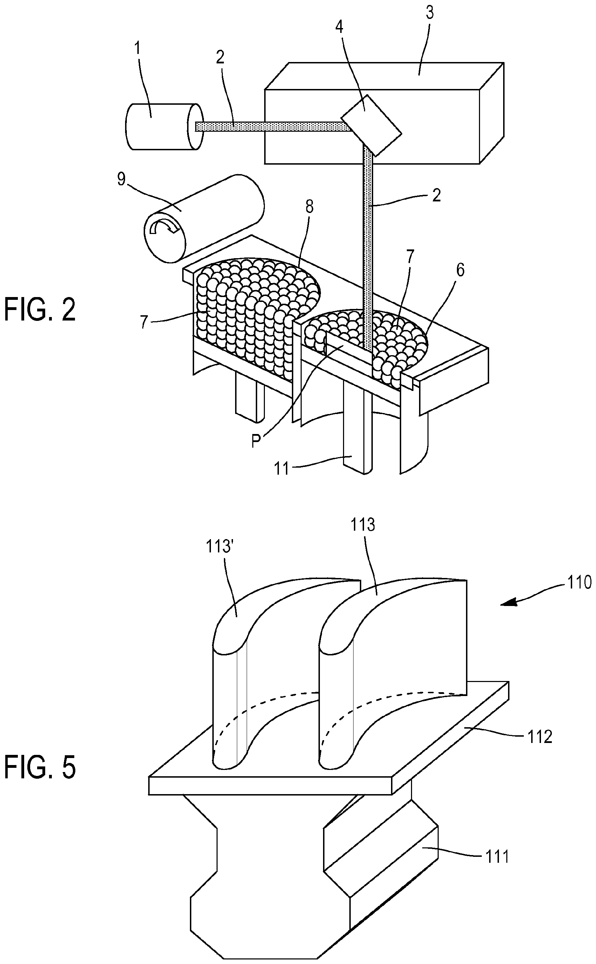

On connaît la technique de fabrication par frittage de poudres qui est un procédé permettant de réaliser directement des pièces mécaniques ou d'autres objets à partir de poudres plus ou moins fines. Selon un mode de fabrication, les poudres sont agglomérées par divers procédés pour constituer une pièce à l'état cru, laquelle est ensuite chauffée jusqu'à une température suffisante pour que les grains soit fusionnent soit se lient par diffusion le long de leurs zones de contact. Une certaine cohésion est ainsi obtenue pour la pièce. Selon une technique particulière, la pièce est construite par couches successives. Dans ce procédé le matériau est présenté sous la forme d'une poudre que l'on chauffe sous l'action d'un faisceau laser ou d'électrons qui est guidé le long d'une trajectoire correspondant à la surface d'une section de la pièce. La répétition d'un apport de poudre et de son frittage par le laser ou le faisceau d'électrons permet de faire épaissir progressivement la pièce et d'obtenir les formes souhaitées. La quantité de chaleur apportée par le faisceau laser ou d'électrons dépend de la nature du matériau. Le cas échéant des polymères - précéramiques ou non - sensibles à la chaleur peuvent être utilisés pour assurer la liaison lors de la formation de la pièce, ceux-ci étant ensuite éliminés par un traitement thermique dans le cas de polymères non précéramiques. La description d'un outillage de réalisation d'une pièce par chauffage laser est donnée par la figure 2 et la mise en oeuvre de cette technique sera détaillée plus loin.

Le document US 5,837,960 décrit la formation de pièces utilisant la technique de frittage de poudres par laser.

Le document FR2712218 décrit des pièces en métal ou en céramique à coque extérieure dense et à âme poreuse. Considérant que, pour les parties chaudes des moteurs à turbine à gaz, la température limite des céramiques est supérieure à celle des alliages utilisés dans l'art antérieur, le présent déposant s'est fixé comme objectif la réalisation de pièces, telles que des aubes mobiles de turbine, en matière céramique selon la technique de liaison de poudres par un faisceau laser ou d'électrons.
L'invention a également pour objectif un moyen de réduire les contraintes mécaniques dans la zone du pied de pièces tournantes telles que des aubes mobiles de turbine, dans la mesure où les contraintes mécaniques les plus importantes sont localisées dans la zone du pied,
La rupture de pièces en matériau céramique monolithique étant initiée par des défauts, l'invention a également pour objectif un moyen permettant de réduire la probabilité de rencontrer un défaut de taille critique.
Les températures susceptibles d'être rencontrées pouvant dépasser les températures limites d'utilisation des céramiques, l'invention a également pour objectif la conception de pièces refroidies.
Le refroidissement étant assuré par la circulation d'un fluide dans la pièce et pour cela des canaux devant être créés au sein de celle-ci, l'invention a également pour objectif un procédé de mise en forme de céramiques permettant de créer ce type de canaux lors de l'élaboration de la pièce.
Plus particulièrement, ce procédé ne doit pas mettre en oeuvre des techniques d'usinages importants.

### Exposé de l'invention

On parvient à ces objectifs conformément à l'invention avec une pièce en matériau céramique comprenant une partie formant une base et une partie formant un voile, la pièce étant caractérisée par le fait que la base est en matériau céramique de faible porosité, que le voile est réalisé par frittage de poudre céramique et qu'il comprend une enveloppe ou contour et un coeur, le coeur étant situé à l'intérieur de l'enveloppe et la porosité du coeur étant supérieure à celle de la base en augmentant quand on s'éloigne de la base.

La structure de la pièce conforme à l'invention par son gradient de porosité ou de densité permet d'avoir une partie haute allégée assurant un niveau de contrainte réduit sur la base dans le cas de pièces mobiles. Elle présente par ailleurs l'avantage de réduire la possibilité de rencontrer un défaut de taille critique susceptible de l'affaiblir en raison de la réduction du volume de céramique au sein des pièces.

En outre le caractère poreux ou la présence de cavités permet de ménager une circulation de fluide de refroidissement ne nécessitant pas d'usinage, contrairement à l'art antérieur.

De préférence la base est réalisée également par frittage de poudre céramique.

Conformément à d'autres caractéristiques, d'une part la porosité du matériau constituant la base est inférieure à 3%, d'autre part la porosité du coeur est supérieure à 5%, de préférence comprise entre 10 et 50%.

Le terme porosité se rapporte à la proportion de vide dans la pièce pour la partie considérée. Ce vide est lié à la structure du matériau, il s'agit de l'espace ménagé entre les grains de matière céramique liés dans la structure. La densité du matériau est en rapport inverse de sa porosité.

Dans la présente demande pour la partie constituant le voile, dans un autre mode de réalisation, on exprime également en termes de porosité le rapport entre le volume de cavités ménagées par des cloisons minces formées par des grains de céramique liés et le volume des cloisons.

Par ailleurs si un refroidissement est prévu, la base comprend aussi des canaux pour acheminer l'air de refroidissement jusqu'au voile. Dans ce cas les canaux n'entrent pas dans la définition de la porosité de la base.

Dans la présente demande, l'invention ainsi prend deux aspects :
- Le contrôle de la porosité de la céramique et donc de la densité ;
- La création de cavités au sein du voile de la pièce conduisant à un abaissement du volume de matière.

Ainsi selon un premier mode de réalisation, le coeur comprend un matériau poreux formé de grains en céramique liés par frittage partiel et ménageant des espaces entre eux.

Par frittage partiel on comprend une technique de frittage à température inférieure à celle qui conduirait à une densité maximale
Selon un autre mode de réalisation, le coeur comprend des cavités séparées par des cloisons, les cloisons étant réalisées par frittage au moyen d'un faisceau laser ou d'électrons. Les cloisons sont denses ; de préférence leur porosité est inférieure à 3%.

Avantageusement, le coeur présente des parties avec des cavités différentes, notamment des parties la taille des cavités augmente quand on s'éloigne de la base.

Selon une forme particulière de réalisation, la pièce comprend un talon dans le prolongement du voile dont la porosité est plus faible que celle du matériau formant le coeur.

L'invention concerne plus particulièrement une aube de turbomachine dont la base forme le pied de l'aube, le voile forme la pale avec éventuellement un talon dont la porosité est inférieure à celle du coeur.

L'invention porte également sur un procédé de fabrication d'une telle pièce avec une étape de formation du voile utilisant un bac de frittage contenant de la poudre dans laquelle affleure la base au début de l'étape et comportant un frittage sélectif de poudre en couches successives au moyen d'un faisceau laser ou d'électrons, les couches successives étant obtenues en faisant descendre la pièce progressivement dans le bac de frittage.

Le procédé comprenant notamment la réalisation de la base séparément par frittage de poudre puis la formation du voile par dépôt de couches successives de poudre céramique et leur liage par frittage de la couche.

### Brève présentation des figures

L'invention sera mieux comprise, et d'autres buts, détails, caractéristiques et avantages de celle-ci apparaîtront plus clairement avec la description explicative détaillée qui suit, d'un mode de réalisation de l'invention donné à titre d'exemple purement illustratif et non limitatif, en référence aux dessins schématiques annexés.

### Sur ces figures

La figure 1 représente une aube mobile de turbine réalisée en matériau céramique de structure conforme à l'invention ;
La figure 2 montre une machine de frittage par fusion laser ;
La figure 3 montre un exemple de base seule d'une pièce conforme à l'invention ;
La figure 4 montre la première couche formée par frittage laser sur la base de la figure 3 ;
La figure 5 montre une variante de réalisation d'une aube double de turbine sur une même base.

### Description détaillée de modes de réalisation de l'invention

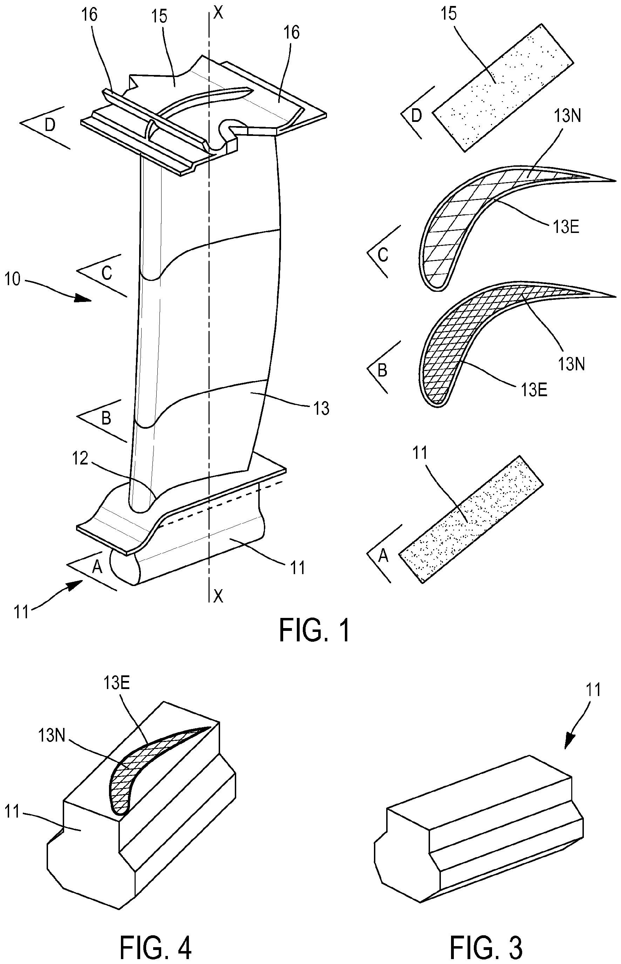

En se reportant à la figure 1 on voit une aube 10 de turbine qui constitue une pièce susceptible d'être réalisée conformément à l'invention. L'aube comprend un pied, la base 11, par lequel elle est montée sur la jante d'un disque de turbine. Le pied est surmonté d'une plateforme 12 et se prolonge, selon son axe XX dans la direction des efforts centrifuges auxquels elle est soumise en fonctionnement de la machine, d'un voile 13 formant la pale balayée par les gaz chaud moteurs. Ici l'aube est surmontée d'un talon 15 pourvu de léchettes 16. Le talon 15 et la plateforme sont des éléments de parois respectivement externes et internes de la veine des gaz moteurs entre lesquels la pale s'étend radialement. Les léchettes forment un joint d'étanchéité avec un anneau ménagé sur le stator de l'étage de turbine.

Conformément à l'invention, cette pièce réalisée en matériau céramique présente une densité variant le long de son axe XX. Cette variation de densité est représentée schématiquement par les coupes selon les plans transversaux par rapport à l'axe XX : A, B, C et D de la pièce le long de l'axe XX.

La base 11 est de densité maximale. Il s'agit par exemple d'un élément obtenu par mise en forme dans un moule d'une poudre céramique, celle-ci étant associée éventuellement à un liant. Cette étape est suivie d'un traitement thermique de frittage de l'ébauche crue issue du moule. Selon la composition du matériau mis en oeuvre, le traitement peut comprendre des étapes intermédiaires de déliantage. La porosité de cet élément est de préférence inférieure à 3%.

Le voile 13 comprend une enveloppe 13 E et un coeur 13N. L'enveloppe forme la paroi extérieure du voile. Elle est fine, par exemple inférieure à 1 mm, de préférence de l'ordre de 0,5 mm, de faible porosité comme la base. L'enveloppe délimite le coeur 13N dont la porosité est plus élevée. Cette porosité est supérieure à 5% de préférence comprise entre 10 et 50%. Corrélativement sa densité est plus faible avec les avantages mentionnés plus haut de réduire les contraintes mécaniques centrifuges sur la base lorsque la pièce, comme dans cet exemple, est montée sur un rotor. Avantageusement, la densité n'est pas la même tout le long de l'axe. Comme on le voit sur les coupes B et C, elle est représentée schématiquement par des quadrillages différents à mailles plus ou moins larges. Le talon, représenté par la coupe D peut avoir une densité inférieure à celle de la base et supérieure à celle du voile. Il est réalisé par frittage de grains de poudre céramique.

Une telle pièce est en partie réalisée par frittage de poudre dont on rappelle le procédé ci-après en relation avec le dispositif de la figure 2 qui représente une machine de réalisation d'une pièce par frittage de poudre au moyen d'un faisceau laser ou d'électrons.

Un générateur 1 de faisceau laser ou d'électrons émet un rayon 2 de puissance appropriée qu'il dirige sur un ensemble de miroirs réfléchissants 3, dont le dernier miroir 4 est pivotant de façon à assurer un balayage de la surface de la pièce à réaliser par exemple l'aube 10 mentionnée plus haut.

La partie de pièce P déjà formée est plongée dans un bac 6 de façon à pouvoir être régulièrement recouverte d'une couche de la poudre 7 adaptée au frittage. Un second bac 8, d'alimentation en poudre, est positionné à côté du bac de frittage 6 et est rempli de cette poudre de frittage 7. Un dispositif formant un piston 9 permet de déplacer une quantité donnée de poudre 7, du bac d'alimentation 8 vers le bac de frittage 6, pour recouvrir la partie de pièce P d'une couche de poudre d'épaisseur donnée. L'épaisseur de cette couche correspond à celle dont peut être augmentée celle de la partie de pièce au cours d'une passe de frittage entre les grains par le rayon 2. Des dispositifs de descente du bac de frittage 6 et de montée du bac d'alimentation 8 permettent, d'une part, de conserver la partie de pièce à fritter P au niveau de l'affleurement des parois du bac 6, et d'autre part, d'amener une couche de poudre 7 ayant la bonne épaisseur, en face du piston 9 du bac d'alimentation 8.

Le frittage et la liaison des grains pour former la pièce 10 s'effectuent par une succession d'opérations élémentaires se déroulant de la façon suivante : la partie de pièce P affleurant le haut des parois du bac de frittage 6, le piston 9 est déplacé en direction de ce bac 6 pour qu'il dépose l'épaisseur souhaitée de poudre 7 sur la partie de pièce P puis est remis en position d'attente à l'extrémité du bac d'alimentation 8. Le faisceau laser ou d'électrons 2 effectue un balayage de la surface de la partie de pièce P à l'aide du miroir oscillant 4, ce qui provoque la fusion partielle - ou une augmentation de température telle que la diffusion entre les grains est activée - des couches de surface de la couche et son agrégation à la pièce P, l'épaisseur est accrue. La partie de pièce P formée est ensuite tirée vers le bas pour compenser l'augmentation de son épaisseur et pour que sa surface revienne à l'affleurement du bac de frittage 6, tandis que le bac d'alimentation 8 est soulevé pour remettre une quantité adéquate de poudre 7 en face du piston 9. Ce processus est répété le nombre de fois qu'il est nécessaire pour aboutir à la géométrie et aux cotes souhaitées pour la pièce complète 10.

Conformément à l'invention, on commence par disposer la base 11 de la pièce à réaliser dans le bac de frittage 6. Cette base 11 représentée sur la figure 3 est de préférence obtenue séparément par un procédé classique de frittage de poudre céramique, c'est-à-dire par formation d'une pièce crue dans un moule, composée de poudres céramiques et d'un liant suivie d'un traitement thermique de frittage avec une étape intermédiaire de déliantage. Dans le cas d'une aube mobile de turbine la base 11 comprend de préférence le pied de l'aube et éventuellement la plateforme. Les procédés conventionnels permettent de réaliser une pièce par frittage très dense dont la porosité est inférieure à 3%. Selon une caractéristique du procédé de l'invention, la base 11 comprend une portion de surface plane sur sa face supérieure, éventuellement au niveau de la plateforme, si celle-ci est prévue.

La base est disposée dans le bac de frittage avec la poudre de céramique de manière à ce que la portion de surface plane affleure la surface de la poudre. Le procédé comprend ensuite la réalisation du voile 13 sur cette base 11, figure 4, au moyen du faisceau laser ou d'électrons selon les étapes indiquées ci-dessus. La trajectoire du faisceau est commandée par un organe de commande qui comprend en mémoire les caractéristiques géométriques du voile. Pour la réalisation d'une couche le faisceau est piloté non seulement en position mais aussi en apport d'énergie.

On crée ainsi la paroi de l'enveloppe 13 E pour la couche en construction avec une porosité donnée, notamment une porosité inférieure à 3%, semblable à celle de la base. A l'intérieur de cette paroi le coeur 13N est construit de manière à ce que sa porosité soit supérieure à celle de la paroi. On obtient une densité plus faible en contrôlant l'énergie du faisceau à un niveau plus faible pour obtenir un frittage partiel. La porosité est supérieure à celle de la base. Elle est d'au moins 5%, de préférence entre 10 et 50%. La construction de la pièce couche par couche permet par ailleurs de réaliser des couches avec un coeur de porosité variant le long de l'axe XX. Cette porosité augmente avantageusement entre la base et le talon.

Selon une variante de réalisation du coeur du voile, le déplacement du faisceau laser est commandé de manière à réaliser des cloisons ménageant des cavités entre elles à la manière d'une structure en nid d'abeille. Les cloisons sont réalisées en un matériau dense comme la paroi constituant l'enveloppe. La taille des cavités peut avantageusement évoluer, de préférence augmenter, entre la base et le talon de l'aube.

Le matériau céramique utilisé peut être de toute nature. De préférence, on choisit des céramiques pouvant être utilisées à des températures supérieures à 1000°C ; il s'agit par exemple de carbures tel que SiC, d'oxydes tel que Al₂O₃ ou de nitrures tel que Si₃N₄. Les céramiques eutectiques conviennent également.

La granulométrie des poudres est sélectionnée pour pouvoir conduire le frittage par laser ou par faisceau d'électrons. On observe que plus la taille de poudre est faible plus il est aisé de réaliser un frittage partiel à basse température.

Le faisceau laser ou d'électrons est adapté au matériau traité. Par exemple dans le cas d'alumine Al₂O₃, un laser YAG émettant à 9400cm⁻¹, de puissance comprise entre 10 et 30W avec un déplacement optimal à la vitesse de 96 mm/s convient pour cette application.

Les céramiques peuvent faire partie d'un mélange avec un précurseur thermofusible qui forme un liant et qui est éventuellement éliminé par la suite par un traitement thermique approprié.

Un usinage final est éventuellement prévu si une diminution de la rugosité est requise.

La méthode utilisée pour la fabrication de ces pièces génère des contraintes résiduelles importantes qui sont dues aux gradients thermiques générés par la fusion successives des couches. Ces gradients peuvent augmenter en fonction de la géométrie, de l'épaisseur, et des changements de sections des pièces à produire. En fonction des matériaux, les contraintes résiduelles issues de ces gradients peuvent générer des déformations de la pièce durant la construction, et des fissurations ou des criques en utilisation. Il importe donc de contrôler la température au cours du processus de frittage et de maintenir une température homogène dans la poudre afin de minimiser les contraintes résiduelles lors de la solidification. Un moyen de chauffage approprié, résistif par exemple, est mis en oeuvre dans ce but.

Conformément à une variante de l'invention la pièce est un doublet d'aubes de turbine représenté à la figure 5. La solution de l'invention permet en effet de réaliser par fabrication directe deux voiles sur une même base. La base 111 comprend un pied pour le montage sur un disque de turbine et une plateforme 112. Sur cette plateforme s'appuient deux voiles 113 et 113' correspondant à deux voiles adjacents dans un rotor de turbine. Ces deux voiles sont construits de la même façon que décrite précédemment.

## Revendications

1. Pièce (10) en matériau céramique destinée à être soumise à des efforts centrifuges, comprenant une partie formant une base (11) et une partie formant un voile (13) s'étendant à partir de la base (11) suivant un axe (XX) correspondant auxdits efforts centrifuges, **caractérisée par le fait que** la base (11) est en matériau céramique de faible porosité et le voile (13) est obtenu par frittage de poudre céramique et qu'il comprend une enveloppe (13E) et un coeur (13N), le coeur étant situé à l'intérieur de l'enveloppe et la porosité du coeur étant supérieure à celle de la base en augmentant suivant la direction dudit axe (XX) quand on s'éloigne de la base.

2. Pièce selon la revendication précédente dont la base (11) est réalisée par frittage de poudre céramique.

3. Pièce selon l'une des revendications 1 et 2, la porosité du matériau constituant la base (11) étant inférieure à 3%.

4. Pièce selon l'une des revendications précédentes dont la porosité du coeur (13N) est supérieure à 5%, de préférence comprise entre 10 et 50%.

5. Pièce selon l'une des revendications 1 à 4 dont le coeur (13N) comprend un matériau poreux formé de grains en céramique liés par frittage partiel.

6. Pièce selon l'une des revendications 1 à 3 dont le coeur (13N) comprend des cavités séparées par des cloisons, le matériau constituant les cloisons ayant une porosité inférieure à 3%.

7. Pièce selon l'une des revendications précédentes dont le coeur (13N) présente des parties avec des cavités différentes, notamment dont la taille augmente quand on s'éloigne de la base.

8. Pièce selon l'une des revendications précédentes comprenant un talon (15) dans le prolongement du voile (13) dont la porosité est plus faible que celle du matériau formant le coeur.

9. Pièce selon l'une des revendications précédentes formant une aube de turbomachine dont la base forme le pied de l'aube, le voile forme la pale avec éventuellement un talon dont la porosité est inférieure à celle du coeur.

10. Procédé de fabrication d'une pièce selon l'une des revendications précédentes comprenant une étape de formation du voile (13) utilisant un bac de frittage (6) contenant de la poudre dans laquelle affleure la base (11) au début de l'étape et comportant un frittage sélectif de la poudre en couches successives au moyen d'un faisceau laser ou d'électrons, les couches successives étant obtenues en faisant descendre la pièce progressivement dans le bac de frittage (6).

11. Procédé selon la revendication précédente comprenant la réalisation de la base séparément par frittage de poudre puis la formation du voile par dépôt de couches successives de poudre céramique et leur liage par frittage de la couche.

## Patentansprüche

1. Teil (10) aus keramischem Material, das dazu bestimmt ist, Zentrifugalkräften ausgesetzt zu werden, bestehend aus einem Teil, das eine Basis (11) bildet, und einem Teil, das eine Bahn (13) bildet, die sich von der Basis (11) entlang einer Achse (XX) erstreckt, die den Zentrifugalkräften entspricht, **dadurch gekennzeichnet, dass** die Basis (11) aus keramischem Material mit geringer Porosität hergestellt ist und die Bahn (13) durch Sintern von keramischem Pulver erhalten wird und dass sie eine Hülle (13E) und einen Kern (13N) umfasst, wobei sich der Kern innerhalb der Hülle befindet und die Porosität des Kerns höher als die der Basis ist und bei zunehmender Entfernung von der Basis entlang der Achse (XX) steigt.

2. Teil nach dem vorstehenden Anspruch, dessen Basis (11) durch Sintern von Keramikpulver hergestellt ist.

3. Teil nach einem der Ansprüche 1 und 2, wobei die Porosität des Materials der Basis (11) weniger als 3 Prozent beträgt.

4. Teil nach einem der vorstehenden Ansprüche, bei dem die Porosität des Kerns (13N) höher als 5 Prozent ist, vorzugsweise zwischen 10 und 50 Prozent.

5. Teil nach einem der Ansprüche 1 bis 4, dessen Kern (13N) ein poröses Material enthält, das aus durch partielles Sintern gebundenen Keramikkörnern besteht.

6. Teil nach einem der Ansprüche 1 bis 3, dessen Kern (13N) durch Trennwände getrennte Hohlräume aufweist, wobei das die Trennwände bildende Material eine Porosität von weniger als 3 Prozent aufweist.

7. Teil nach einem der vorstehenden Ansprüche, dessen Kern (13N) Bereiche mit unterschiedlichen Kavitäten aufweist, wobei deren Größe mit zunehmender Entfernung von der Basis ansteigt.

8. Teil nach einem der vorstehenden Ansprüche, das einen Absatz (15) in der Verlängerung der Bahn (13) aufweist, dessen Porosität schwächer ist als die des den Kern bildenden Materials.

9. Teil nach einem der vorstehenden Ansprüche, das eine Turbomaschinenschaufel bildet, deren Basis den Fuß der Schaufel bildet, die Bahn bildet die Schaufel, die möglicherweise über einen Absatz verfügt, dessen Porosität geringer ist als die des Kerns.

10. Verfahren zur Herstellung eines Teils nach einem der vorstehenden Ansprüche, umfassend einen Schritt zur Bildung der Bahn (13) unter Verwendung einer Sinterschale (6), die Pulver enthält, in dem die Basis (11) am Anfang des Schrittes steckt, und ein selektives Sintern des Pulvers in aufeinanderfolgenden Schichten mittels eines Laserstrahls oder von Elektronen, wobei die aufeinanderfolgenden Schichten durch allmähliches Absenken des Teils in die Sinterschale (6) erhalten werden.

11. Verfahren nach dem vorstehenden Anspruch, umfassend die separate Herstellung der Basis durch Sintern von Pulver, dann die Bildung der Bahn durch Abscheidung aufeinanderfolgender Schichten von Keramikpulver und deren Bindung durch Sintern der Schicht.

## Claims

1. Part (10) made of ceramic material, intended to be subjected to centrifugal forces, comprising a portion forming a base (11) and a portion forming a wall (13), the wall extending from the base (11) and according to an axis (XX) of the part corresponding to the direction of the centrifugal forces, **characterised in that** the base (11) is made of ceramic material of low porosity and the wall (13) is obtained by ceramic powder sintering, and **in that** it has an envelope (13E) and a core (13N), the core being positioned within the envelope and the porosity of the core being greater than that of the base, and increasing along said axis (XX) as the base gets further away.

2. Part according to the preceding claim, wherein the base (11) is produced by ceramic powder sintering.

3. Part according to either claim 1 or claim 2, the porosity of the material forming the base (11) being less than 3 %.

4. Part according to any of the preceding claims, wherein the porosity of the core (13N) is greater than 5 %, preferably between 10 and 50 %.

5. Part according to any of claims 1 to 4, wherein the core (13N) comprises a porous material made of ceramic grains which are bound by partial sintering.

6. Part according to any of claims 1 to 3, wherein the core (13N) comprises cavities separated by partitions, the material forming the partitions having a porosity of less than 3 %.

7. Part according to any of the preceding claims, wherein the core (13N) has portions having different cavities, in particular wherein the size increases as the base gets further away.

8. Part according to any of the preceding claims, comprising a heel (15) in the extension of the wall (13), of which the porosity is lower than that of the material forming the core.

9. Part according to any of the preceding claims, forming a turbine engine blade of which the base forms the root of the blade, the wall forms the blade airfoil, optionally having a heel of which the porosity is less than that of the core.

10. Method for manufacturing a part according to any of the preceding claims, comprising a step of forming the wall (13) by using a sintering tray (6) containing powder with which the base (11) is flush at the start of the step, and comprising selective sintering of the powder in successive layers by means of a laser beam or electron beam, the successive layers being obtained by making the part move progressively downwards in the sintering tray (6).

11. Method according to the preceding claim, including producing the base separately by powder sintering and then forming the wall by depositing successive layers of ceramic powder and binding them by sintering the layer.
